# DEMANDE DE BREVET EUROPEEN

(11) **EP 4 621 458 A1**
(43) Date de publication de la demande: **24.09.2025**
(21) Numéro de dépôt: 25164607.1
(22) Date de dépôt: 19.03.2025
(51) Int. Cl.: G02B 6/30, G02B 6/32, G02B 6/26

(54) **FIBRE OPTIQUE LENTILLÉE UNITAIRE COMPRENANT UNE FIBRE OPTIQUE À L'EXTRÉMITÉ DISTALE CLIVÉE À 90° ET FUSIONNÉE AVEC UNE LENTILLE SUR LA SURFACE EXTERNE DE LAQUELLE EST FORMÉ UN MIROIR CONCAVE**

(30) Priorité: 21.03.2024 FR 2402841
(71) Demandeur: Radiall, 93300 Aubervilliers (FR)
(72) Inventeur: LICCHESI, Victor, 3829 LA VERPILLIERE (FR); BUTTIN, Florent, 38690 BEVENAIS (FR)
(74) Mandataire: Ipsilon

(57) **Abrégé**

Fibre optique lentillée comprenant une fibre optique à l'extrémité distale clivée à 90° et fusionnée avec une lentille sur la surface externe de laquelle est formé un miroir concave.

L'invention consiste essentiellement en une fibre optique lentillée (1) comprenant une lentille optique (3), de préférence fusionnée en bout d'une fibre optique (2) découpée à angle droit et dont la forme, notamment de sa surface externe (4) qui est parfaitement maîtrisée permet de réaliser une optique catadioptrique ou miroir concave avec un renvoi d'angle pour adapter et optimiser les flux optiques entrant ou sortant entre une fibre optique et un composant optoélectronique, en émission ou en réception.

## Description

### Domaine technique

La présente invention concerne le domaine des fibres optiques, plus particulièrement des fibres optiques lentillées, destinées à la transmission optique et/ou de données.

On désigne par fibre optique lentillée, une fibre optique dont l'une de ses extrémités, dite extrémité distale, est prolongée par un élément optique adapté pour reformer un flux optique entrant ou sortant de la fibre.

L'invention concerne également un sous ensemble optique ou OSA (« Optical Sub Assembly ») qui est un sous-ensemble regroupant un(des) composant(s) optoélectronique(s) et une ou des fibres optiques lentillées.

L'invention concerne aussi bien un sous-ensemble émetteur, destiné à réaliser la conversion d'un signal électrique en un signal optique, qu'un sous-ensemble récepteur destiné à réaliser la conversion d'un signal optique en un signal électrique.

L'invention concerne aussi un module optoélectronique qui intègre un ou plusieurs sous-ensembles, sur une carte électronique dans un boitier.

L'invention concerne aussi un module émetteur-récepteur qui combine un sous-ensemble récepteur et un sous-ensemble émetteur qui partagent des circuits électroniques communs et une carte électronique commune, usuellement désigné en anglais sous la dénomination «Transceiver », contraction de «TRANSmitter» (« émetteur ») et de « reCEIVER » («récepteur»).

Une application privilégiée de l'invention concerne les modules optoélectroniques destinés à être mis en œuvre notamment dans le domaine aéronautique, le domaine spatial, le domaine de la défense, celui du transport ou du médical ou encore le domaine des télécommunications, le domaine des communications de données et le domaine de l'industriel.

Bien que décrite en référence à cette application privilégiée, l'invention peut être appliquée à n'importe quel système nécessitant la mise en place d'une fibre optique lentillée.

### Technique antérieure

On connaît des systèmes de liaison optique, qui utilisent des modules optoélectroniques et un lien optique réalisé par une ou plusieurs fibres optiques. Chaque module optoélectronique émetteur ou récepteur est constitué d'une carte électronique, d'un composant optoélectronique et de son composant électronique de commande, d'une ou plusieurs fibres optiques qui peuvent être concaténées en rubans et d'un dispositif de couplage optique entre le(s) composant(s) optoélectronique(s) et la ou les fibres optiques.

En tant que dispositif de couplage optique, il est connu de mettre en œuvre une fibre optique lentillée pour adapter les flux optiques entre ladite fibre optique et un composant optoélectronique. En émission, le flux optique est ainsi optimisé entre une source optique ou de lumière, telle qu'une LED (acronyme anglo-saxon pour *« Light-Emitting Diode »),* un laser, un laser VCSEL (acronyme anglo-saxon pour *« Vertical-Cavity Surface-Emitting Laser »),* et la fibre optique (guide d'onde) qui transporte le flux optique pour transmettre un signal optique. En réception, le flux optique est optimisé entre la fibre optique et le récepteur de lumière (photodiode, etc...).

Le brevet EP1481274B1 divulgue dans un mode une fibre optique, dite "en queue de cochon" correspondant au terme anglo-saxon "pigtail", c'est-à dire non connectorisée à une de ses extrémités, dite proximale, et dont l'extrémité distale est fusionnée avec plusieurs éléments optiques jointifs dont deux espaceurs sous la forme de portions de fibre optique sans cœur et à unique indice de réfraction, agencés de part et d'autre d'une lentille optique à gradient d'indice de réfraction (GRIN), en se terminant par un biseau revêtu d'une surface asphérique réfléchissante qui forme l'extrémité libre. Alternativement en lieu et place du biseau et de la surface asphérique réfléchissante, il est prévu une surface incurvée à l'extrémité de l'espaceur distal, de sorte qu'un signal optique dirigé contre cette surface incurvée soit redirigé. Quel que soit le mode, cette solution est complexe et chère à fabriquer et en outre ne permet pas de concentrer un faisceau optique sortant directement de la fibre optique "pigtail". En effet, quel que soit le mode de réalisation présenté dans ce brevet, la fibre optique est toujours munie, à son extrémité distale, d'au moins une lentille GRIN permettant de collimater le faisceau optique avant d'arriver sur le miroir, plan ou concave.

Aussi, la suppression d'une telle lentille GRIN entraînerait un défaut de convergence ou de parallélisation du faisceau optique, conduisant à une perte de flux optique, en entrée de fibre optique ou au niveau du composant optoélectronique.

La demande de brevet US2021/341688 divulgue un système de couplage optique entre des fibres optiques et un laser VCSEL, qui comprend une ferrule optique comprenant un corps biseauté à un angle d'environ 45° à son extrémité distale et des fibres optiques affleurant la surface biseautée du corps, et un miroir concave réalisé à l'extrémité de certaines des fibres. Cette solution est également complexe et chère à fabriquer. En outre, un biseau à 45° implique une difficulté supplémentaire à positionner l'axe optique en sortie de fibre sur la surface biseautée, car l'intersection entre la surface biseautée de l'extrémité de la fibre et le cylindre constituant l'enveloppe du coeur de la fibre optique forme une ellipse. Cela entraîne par conséquent une précision imparfaite dans le positionnement du miroir concave par rapport à l'axe optique de la fibre. Par ailleurs, la complexité du positionnement de la lentille par rapport à l'axe optique peut entraîner des réglages de fabrication plus longs, donc plus coûteux. Enfin, le flux optique en direction ou en provenance du laser VCSEL passe à travers au moins un matériau d'une des fibres optiques, en particulier la gaine de la fibre optique , ce qui complique le calcul du trajet du flux optique. De plus, cette solution ne permet pas d'obtenir une surface plane de référence d'orientation angulaire de la lentille autour de l'axe de la fibre optique.

Il existe donc un besoin d'améliorer les fibres optiques lentillées, notamment destinées à réaliser un couplage optique avec un composant optoélectronique, afin de pallier les inconvénients précités.

L'invention vise à répondre à tout ou partie de ce besoin.

### Exposé de l'invention

Pour ce faire, l'invention a pour objet, selon l'un de ses aspects, une fibre optique lentillée unitaire comprenant :
- une fibre optique d'axe longitudinal (X), dont l'extrémité distale est une surface plane orthogonale à l'axe longitudinal ; :
- une lentille optique principale à unique indice de réfraction, agencée à l'extrémité distale de la fibre et dont la surface externe est délimitée au moins par une portion concave et une portion plane, parallèle à ou inclinée selon un angle non nul avec l'axe longitudinal de la fibre, la lentille optique principale étant formée intégralement sur l'extrémité distale de la fibre optique, en formant un élément monobloc avec cette dernière;
- un miroir épousant au moins une partie de la portion concave de la lentille principale, le miroir étant au moins en partie réfléchissant dans au moins une gamme de longueurs d'onde donnée, de sorte qu'au moins une partie d'un faisceau optique provenant de la fibre et traversant la lentille principale est réfléchie par le miroir pour sortir par la portion plane de la lentille principale ou réciproquement, qu'au moins une partie d'un faisceau optique traversant la portion plane de la lentille principale et traversant la lentille principale est réfléchie par le miroir pour sortir par la fibre.

Par « concave », on entend ici et dans le cadre de l'invention, une surface dont le creux est orienté vers la fibre optique.

Avantageusement, la lentille optique principale est fusionnée avec la fibre optique de sorte à former un élément monobloc.

Selon un mode de réalisation avantageux, la fibre optique lentillée comprend une lentille optique supplémentaire, agencée à la surface de la portion plane.

Selon une configuration avantageuse, la surface externe de la lentille optique principale est également délimitée par une portion d'extrémité libre de hauteur (e) supérieure ou égale à 100 nm.

Selon cette configuration et une caractéristique avantageuse, la surface externe de la lentille optique principale est délimitée par un parallélépipède droit dont une face est la portion plane et une autre face est la portion d'extrémité libre de hauteur non nulle.

Selon une autre configuration avantageuse, la surface externe de la lentille optique principale est également délimitée par une portion arrondie épousant au moins en partie le diamètre externe de la fibre optique.

De préférence, l'épaisseur (e') de la portion arrondie est supérieure ou égale à 100 nm.

Avantageusement, la hauteur de la lentille principale est inférieure ou égale au rayon externe de la fibre optique.

Avantageusement encore, la portion concave de la surface externe de la lentille principale, et le cas échéant de celle supplémentaire, est une surface biconique, de préférence une double-paraboloïde.

De préférence, le matériau de la lentille principale, et le cas échéant de celle supplémentaire, est transparent dans la gamme de longueurs d'onde donnée, de préférence comprises entre 800 et 1700 nm.

Le matériau constitutif de la lentille principale, et le cas échéant de celle supplémentaire, peut être choisi parmi les polymères transparents ou un verre transparent à la longueur d'onde utilisée, de préférence entre 800 et 1700 nm. Il peut s'agir d'une résine photopolymère, telle qu'un époxyde, un acrylate ou une combinaison de ceux-ci, un polyester insaturé, un uréthane, un matériau sol-gel. Il peut s'agir également d'une résine thermoplastique, telle que le polyéthylèneimine (PEI) ou le polyamide-imide (PAI).

Selon une première variante de réalisation, le miroir est une couche métallique, de préférence choisie parmi Au, Al, Ni, Ag, déposée sur la portion concave de la lentille.

Selon une seconde variante de réalisation, le miroir est une couche diélectrique réfléchissante dans la gamme de longueurs d'onde donnée.

Selon un mode de réalisation avantageux, la fibre optique lentillée unitaire comprend au moins une projection, de préférence deux agencées de part et d'autre du miroir, en saillie au-delà de la portion d'extrémité libre de la surface externe, la(les) projection(s) étant destinée à former une butée axiale avec un support pour positionner axialement la fibre optique.

Avantageusement, chaque projection comprend une zone, de préférence sous la forme d'une face plane, de butée orthogonale à l'axe longitudinal (X) de la fibre optique. On peut ainsi garantir un appui plan-plan en tant que butée axiale.

Avantageusement encore, la(les) projection(s) est(sont) réalisée(s) dans le même matériau que celui de la lentille optique. On peut avantageusement réaliser cette(ces) projection(s) lors de la fabrication additive de la lentille optique. De manière alternative, la(les) projection(s) peuvent également être imprimées par-dessus la lentille déjà formée et/ou réalisées dans un matériau aux propriétés mécaniques différentes du matériau de la lentille. Quelle que soit la variante de réalisation, la géométrie de la ou les projections doit laisser un accès à la surface de la lentille optique afin d'effectuer le dépôt pour la réalisation du miroir, d'où la présence d'un espace vide entre deux projections agencées de part et d'autre de la lentille.

Selon une configuration avantageuse, la(les) projection(s) est(sont) réalisée(s) en étant transversalement circonscrite(s) dans la section transversale de la fibre optique.

La ou les projections selon ce mode permettent une amélioration du positionnement axial passif de la fibre lentillée dans une rainure d'un support de fibres lentillées, notamment un substrat en silicium. Cela permet de positionner correctement le flux optique vis-à-vis du composant optoélectronique, tel qu'un laser ou une photodiode, avec lequel la fibre optique doit être couplée.

Ce positionnement est avantageusement complètement passif, car grâce à la (aux) butée(s) mécanique(s) formée(s) par la(les) projection(s), il n'y a pas besoin d'utiliser une transmission de signal optique et un banc de mesure complexe pour calibrer le positionnement.

Seule une détection de la butée mécanique effective, notamment par un capteur de force ou une observation optique du contact mécanique, suffit à garantir le bon positionnement axial recherché.

Les projections peuvent prendre différentes formes, notamment lorsque la lentille optique est réalisée avec une surface externe comprenant un prisme.

Selon une variante de réalisation, une projection peut avoir une forme de corne qui s'étend depuis la portion extrémité libre d'un prisme droit.

L'invention concerne également un sous-ensemble optique comprenant :
- au moins une fibre optique lentillée unitaire telle que décrite précédemment,
- au moins un composant optoélectronique, agencé à distance et en regard de la portion plane de la lentille principale parallèle à ou inclinée selon un angle non nul avec l'axe longitudinal de la fibre.

De préférence, l'espace entre le composant optoélectronique et la portion plane de la lentille principale, ou le cas échéant avec la lentille supplémentaire, est rempli d'air, de résine transparente dans la gamme de longueur d'ondes donnée ou d'un adhésif transparent dans la gamme de longueur d'ondes donnée.

Selon un mode de réalisation multivoie, le sous-ensemble comprend:
- un support comprenant une pluralité de rainures, de préférence en forme de V,
- une pluralité de fibres optiques lentillées positionnées et bloquées chacune dans une des rainures,
- une barrette d'une pluralité de composants optoélectroniques, agencée sur le support avec chacun des composants optoélectroniques, agencés à distance et en regard de la portion plane de la lentille principale d'une des fibres optiques.

L'invention concerne également un module optoélectronique, comprenant au moins un sous-ensemble optique tel que décrit précédemment.

L'invention concerne enfin un procédé de réalisation une fibre optique lentillée unitaire telle que décrite précédemment, comprenant les étapes suivantes :
i/ positionnement d'une fibre optique sur un support,
ii/ découpe à 90°, notamment par clivage, et préparation de l'extrémité distale de la fibre optique,
iii/ trempage ou immersion de l'extrémité distale de la fibre optique dans une résine en matériau photopolymère,
iv/ polymérisation par laser de la résine afin de former une surface externe de lentille optique principale délimitée au moins par une portion concave et une portion plane, parallèle à l'axe longitudinal de la fibre optique,
v/ dépôt d'un matériau au moins partiellement réfléchissant sur tout ou partie de la portion concave de la surface externe de la lentille principale, de sorte à former le miroir.

L'étape i/ peut être réalisée avant l'étape ii/ ou inversement l'étape ii/ peut être réalisée avant l'étape i/.

Par « préparation », on entend ici et dans le cadre de l'invention, toutes les étapes usuelles de surfaçage pour assurer un état souhaité de la surface d'extrémité de fibre optique, notamment avec une planéité élevée et une faible rugosité, par exemple par clivage et/ou polissage.

Par « trempage», on entend ici et dans le cadre de l'invention, le fait d'immerger l'extrémité d'une fibre optique dans un bain de résine photopolymère puis sa sortie du bain avant le démarrage de la polymérisation, dans la goutte restant par capillarité à l'extrémité de la fibre.

Par « immersion », on entend ici et dans le cadre de l'invention, le fait d'immerger l'extrémité d'une fibre optique dans un bain de résine photopolymère et de la laisser dans le bain lors de la polymérisation.

L'étape iv/ est réalisée avantageusement par photopolymérisation biphotonique (d'acronyme anglo-saxon « 2PP » pour « two photon polymerization »).

Ainsi, l'invention consiste essentiellement en une fibre optique lentillée unitaire, avec une lentille optique, de préférence fusionnée en bout d'une fibre optique découpée à angle droit et dont la forme, notamment de sa surface externe qui est parfaitement maîtrisée permet de réaliser une optique catadioptrique ou miroir concave avec un renvoi d'angle pour adapter et optimiser les flux optiques entrant ou sortant entre une fibre optique et un composant optoélectronique, en émission ou en réception.

La lentille optique est formée intégralement sur l'extrémité distale de la fibre optique en formant un élément monobloc avec cette dernière, avantageusement par l'impression additive ou 3D par photopolymérisation, de préférence par laser, sur la fibre optique d'un matériau transparent aux longueurs d'onde utilisées, avant traitement réfléchissant pour obtenir la surface catadioptrique délimitant le miroir.

La maîtrise de la forme d'une fibre optique et de l'état de surface de l'optique permet de garantir le guidage du flux optique entre la fibre et le composant optoélectronique. L'impression par polymérisation par laser d'un matériau transparent directement sur la fibre est simple et bien maîtrisée. Une fois le matériau imprimé et stabilisé, la surface externe de la portion concave de la lentille optique, imprimée, est rendue réflective totalement ou partiellement en définissant un miroir pour une longueur d'onde ou une plage de longueur d'onde donnée.

Ainsi, les avantages de l'invention comparativement aux fibres optiques lentillées selon l'état de l'art sont nombreux parmi lesquels on peut citer :
- une réduction des pertes de signal du fait de la mise en œuvre d'un miroir sur la portion concave de la lentille, par rapport à la mise en oeuvre d'un miroir plan selon l'art antérieur, et par-là une amélioration du bilan de la transmission du signal ;
- une réduction des pertes de signal du fait de la focalisation du faisceau optique par le miroir concave, au plus près de la fibre optique ou du composant optoélectronique, et par-là une amélioration du bilan de la transmission du signal ;
- une grande précision dans le positionnement de la lentille du fait de la découpe, aussi appelée clivage droit, à 90° de l'axe de la fibre ;
- le flux optique en direction du composant optoélectronique reste dans le matériau transparent de la lentille et ne repasse pas à travers la fibre optique, ce qui simplifie le calcul du trajet du flux optique ;
- une grande maîtrise de la forme de lentille par la technique de fabrication additive par polymérisation par laser directement en bout d'une fibre optique préalablement préparée ;
- un positionnement et une fabrication facilités du miroir par rapport à **l'axe** de la fibre rendu possible par la découpe à 90° de la fibre qui définit un référentiel circulaire (diamètre du cœur de la fibre);
- un positionnement de la fibre optique dans une imprimante de fabrication additive pour la lentille, facilité par la découpe à 90° de la fibre ;
- une mise au point de la focale à l'interface plus aisée sur une fibre optique clivée à 90° ;
- l'absence de matière ajoutée autour de la fibre, mais seulement en extrémité, pour réaliser la lentille, permet un montage dans une rainure en V ;
- la fibre optique unitaire munie de sa lentille optique qui ne dépasse pas la section transversale de la fibre optique, peut être glissée dans une rainure en V d'un support en vue de la fabrication d'un sous-ensemble optique (OSA acronyme anglo-saxon pour « Optical Sub Assembly »)
- -dans une version de sous-ensemble optique (OSA) à multifibres sous la forme d'un ruban, un positionnement angulaire des fibres à plat facilité d'une part par la surface plane de la portion plane de surface externe de la lentille optique et d'autre par l'axe d'alignement des différentes fibres optique du ruban. Sur ce dernier point, le plan passant par les axes optiques de toutes les fibres permet d'orienter la réalisation d'un prisme droit en tant que partie de surface externe de la lentille.
- la fabrication additive directe/in situ de la lentille sur fibre optique permet de s'affranchir d'une étape supplémentaire d'assemblage, collage d'une optique fabriquée séparément, par moulage ou surmoulage par exemple ;
- la possibilité d'une impression de formes et tailles de lentilles différentes pour chacune des fibres d'un réseau de fibres ;
- la possibilité d'une adaptation de la lentille au cas par cas, par exemple en tenant compte d'un flux lumineux entrant ou sortant, ou pour des longueurs d'onde différentes ;
- un positionnement unitaire et à souhait de la lentille optique sur la fibre optique, optimisant ainsi sa position vis à vis du cœur de la fibre;
- du fait de la fabrication unitaire possible par impression 3D à deux photons (2PP), une souplesse pour changer les formes de lentilles, un coût moindre par rapport à un procédé par moulage, et la possibilité de tester rapidement des formes variées de lentilles et d'ajuster la mise au point.D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] la figure 1 représente en vue en coupe longitudinale un exemple de fibre optique lentillée selon l'invention.
[Fig 2] la figure 2 est une vue en perspective de la fibre optique lentillée selon la figure 1.
[Fig 3] la figure 3 est une vue en perspective d'un exemple de fibre optique lentillée selon une alternative et une variante de réalisation de la lentille optique selon l'invention.
[Fig 4] la figure 4 représente en vue en coupe longitudinale un sous-ensemble optique comprenant une fibre optique lentillée selon les figures 1 et 2 et un composant optoélectronique sur son substrat.
[Fig 5] la figure 5 est une vue en perspective du sous-ensemble optique selon la figure 4.
[Fig 6] la figure 6 est une vue en perspective d'un exemple de fibre optique lentillée selon une variante de réalisation de la lentille optique selon l'invention.
[Fig 7] la figure 7 est une vue en perspective montrant un exemple de sous-ensemble optique multivoies comprenant une pluralité de fibres optiques lentillées selon l'invention et une barrette de composants optoélectroniques sur un support adapté.
[Fig 8] la figure 8 est une vue en perspective d'un mode de lentille optique en bout de fibre optique, qui comprend deux projections en saillie formant des butées de positionnement axial selon une première variante de réalisation selon l'invention.
[Fig 9] la figure 9 est une vue en perspective illustrant une deuxième variante du mode de réalisation de la lentille optique avec deux projections en saillie formant des butées de positionnement axial
[Fig 10] la figure 10 est une vue en perspective illustrant une troisième variante du mode de réalisation de la lentille optique avec deux projections en saillie formant des butées de positionnement axial.
[Fig 11] la figure 11 est une vue en coupe longitudinale et en perspective illustrant la mise en butée axiale d'une fibre optique lentillée unitaire intégrant des projections selon la deuxième variante illustrée à la figure 9.
[Fig 12] la figure 12 reprend la figure 11 mais uniquement en vue de coupe longitudinale.

### Description détaillée

Dans la description qui va suivre ainsi que dans l'ensemble de la présente demande, les termes « distal » et « proximal » sont utilisés par référence avec un flux optique à travers une fibre optique lentillée selon l'invention. Ainsi, l'extrémité distale est l'extrémité de la fibre comprenant la lentille optique avec miroir de l'invention par lequel un flux optique ayant parcouru la fibre optique sort.

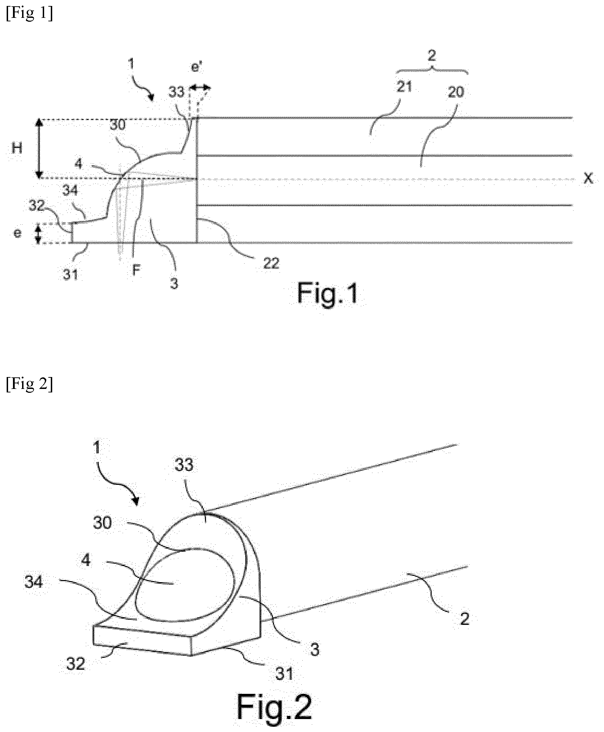

On a représenté sur les figures 1 et 2 un exemple de fibre optique lentillée selon l'invention, globalement désignée par la référence 1.

Cette fibre lentillée 1 comprend tout d'abord une fibre optique 2 d'axe longitudinal (X) comprenant un cœur 20 et une gaine 21 entourant le cœur 20.

L'extrémité distale 22 de la fibre 2 est une surface plane orthogonale à l'axe longitudinal X.

Une lentille optique principale 3 à unique indice de réfraction est agencée à l'extrémité distale 22 de la fibre. De préférence, la lentille optique est formée intégralement, c'est-à-dire fusionnée, avec la fibre et donc forme avec cette dernière un élément monobloc.

La surface externe de cette lentille principale 3 est délimitée par une portion concave 30 et une portion plane 31, parallèle à l'axe longitudinal X ou inclinée selon un angle non nul par rapport à l'axe longitudinal X. Cet angle peut être de quelques dizaines de degrés.

De préférence, la portion concave 30 est une surface biconique, avantageusement une double-paraboloïde.

Cette portion plane 31 est une face d'un parallélépipède droit dont une autre face 32 est la portion d'extrémité libre de la lentille de hauteur e non nulle. De préférence, cette hauteur e est au moins égale à 100 nm. Pour des raisons de robustesse de la face 32, la hauteur e est de préférence au moins 20 µm, voire de préférence au moins 50 µm. Cette hauteur e minimale permet d'éviter d'avoir une pointe fragile, donc cassante lors de la manipulation de la fibre lentillée, par exemple lors de sa mise en position dans un support 9.

Cette portion plane 31 peut être utilisée en tant qu'appui mécanique avec un élément environnant ou en tant que surface de référence pour définir une orientation angulaire par rapport à l'axe longitudinal X de la fibre optique. Autrement dit, la portion plane 31 permet d'orienter la portion concave angulairement en rotation autour de l'axe X de la fibre optique, et donc d'orienter le flux optique sortant de la lentille par rapport audit axe X.

En outre, la surface externe de la lentille optique 3 est également délimitée par une portion arrondie 33, dans un plan perpendiculaire à l'axe X, épousant au moins en partie le diamètre externe de la fibre optique 2.

L'épaisseur e' de l'extrémité de la portion arrondie 33 du prisme permet d'assurer l'adhérence entre la lentille, lors de sa fabrication, et l'extrémité distale 22 de la fibre. L'épaisseur e' est de préférence d'au moins 100 nm. Dans le cadre de fibres optiques agencées dans un ruban, l'épaisseur e' peut prendre une valeur différente selon la fibre considérée, afin de compenser d'éventuelles différences de longueur entre fibres du ruban suite à l'opération de clivage.

Enfin, une autre portion arrondie 34 peut assurer la jonction entre la portion concave 30 et le parallélépipède droit.

Avantageusement, la hauteur H de la lentille 3, définie par la distance entre l'axe optique de la fibre et le sommet de portion arrondie 33, est inférieure ou égale au rayon externe de la fibre optique. Autrement dit, la portion arrondie 33 se situe de préférence en retrait à l'intérieur de l'enveloppe cylindrique de la fibre optique 2. Le positionnement en retrait de la portion arrondie 33 par rapport à l'enveloppe cylindrique de la fibre optique facilite l'assemblage de la fibre optique lentillée dans le support 9, en particulier l'assemblage par glissement dans les rainures 90.

Le matériau de la lentille principale 3 est de préférence transparent dans une gamme de longueurs d'onde donnée, de préférence comprises entre 800 et 1700 nm.

Le matériau de la lentille 3 est de préférence une résine en photopolymère, par exemple en époxyde , acrylate, urethane, en un matériau sol-gel.

Un miroir 4 épouse au moins une partie de la portion concave 30 de la lentille principale 3. Ce miroir 4 est au moins en partie réfléchissant dans au moins la gamme de longueurs d'onde donnée.

Le miroir 4 peut être une couche métallique, de préférence choisie parmi les éléments chimiques Au, Al, Ni, Ag, ou une couche diélectrique réfléchissante dans la gamme de longueurs d'onde donnée, déposée sur la portion concave 30 de la lentille. La couche métallique permet de réfléchir tout ou partie du flux optique. La couche diélectrique permet de réfléchir certaines longueurs d'ondes, réalisant ainsi un filtre par longueur d'onde.

Le fonctionnement de la fibre optique lentillée est le suivant.

Comme illustré par les pointillés en figure 1, au moins une partie d'un faisceau optique F provenant du cœur 20 de la fibre 2 diverge après le passage au travers de l'extrémité distale 22, traversant la lentille 2 puis est réfléchie par le miroir 4 qui la focalise, pour sortir, notamment perpendiculairement par rapport à l'axe longitudinal X, par la portion plane 31 de la lentille. La réalisation de la lentille miroir, au plus proche de l'extrémité distale 22 de la fibre optique limite au maximum la dispersion du faisceau avant son incidence sur le miroir concave. Cela permet également de réduire la dimension de la lentille.

A l'inverse, au moins une partie d'un faisceau optique traversant la portion plane 31 de la lentille est réfléchie par le miroir 4 pour sortir par le cœur 20 de la fibre.

La portion plane 31 de la surface externe de lentille principale 3 permet de ne pas introduire de déformation supplémentaire sur le faisceau optique F entrant ou sortant par cette face.

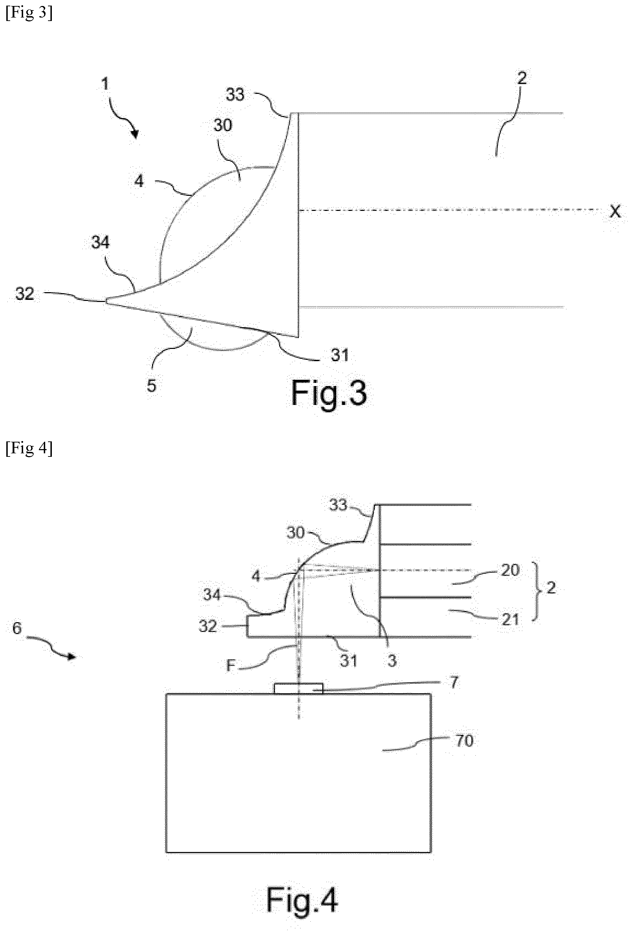

Une alternative de l'invention illustrée à la figure 3 peut consister à réaliser une portion plane non parallèle à l'axe longitudinal X, c'est-à-dire inclinée selon un angle non nul par rapport à celui-ci. Ainsi, dans le cas d'un faisceau optique provenant de la fibre optique et réfléchi par le miroir avec un angle différent de 90°, une portion plane 31 non parallèle à l'axe longitudinal X de la fibre optique peut être traversée perpendiculairement par le faisceau réfléchi par le miroir, sans introduire de nouvelle déviation de trajectoire du faisceau. De plus, une portion plane 31 inclinée selon un angle non nul par rapport à l'axe de la fibre permet d'éviter une réflexion de la lumière émise par une source de lumière vers elle-même.

Par ailleurs, par rapport aux fibres lentillées de l'art antérieur comprenant un miroir plan et une lentille séparée, la portion concave réflective de l'invention est deux fois plus convergente pour un même rayon de lentille. Autrement dit, le faisceau optique peut se focaliser vers la fibre optique ou vers la surface du composant optoélectronique sur une distance beaucoup plus courte. Par conséquent, la portion concave réflective selon l'invention permet d'obtenir un système optique redirigeant et faisant converger le faisceau optique beaucoup plus compact.

Une variante avantageuse peut consister à réaliser, en dessous de la portion plane 31, une lentille optique supplémentaire 5, également à unique indice de réfraction, en sus de la lentille principale 3. Selon cette variante la portion plane 31 peut être ou non parallèle à l'axe longitudinal X de la fibre.

La figure 3 montre ainsi une configuration avec la lentille optique supplémentaire 5 en dessous d'une portion plane 31 inclinée par rapport à l'axe longitudinal X.

De préférence, la surface externe de cette lentille supplémentaire 5 peut être biconique, de préférence encore une double paraboloïde.

Le matériau de la lentille supplémentaire 5 est de préférence transparent dans une gamme de longueurs d'onde donnée, de préférence comprises entre 800 et 1700 nm.

Le matériau de la lentille 5 est de préférence une résine en photopolymère, par exemple en époxyde, acrylate, uréthane, en un matériau sol-gel.

Cette lentille optique supplémentaire 5 permet encore d'améliorer la focalisation d'un faisceau provenant de la fibre optique vers un composant optoélectronique, et inversement. Cette lentille supplémentaire 5 forme de préférence un élément monobloc avec la fibre 2 et la lentille principale 3.

Ainsi, pour réaliser cette forme complexe de lentille principale 3, le cas échéant avec la lentille optique supplémentaire 5 et aux dimensions les plus adaptées aux besoins, les inventeurs ont mis en œuvre une technique d'impression additive par photopolymérisation, de préférence par laser. Cette méthode permet de réaliser une lentille compacte directement à l'extrémité d'une fibre optique unitaire.

Plus précisément, pour réaliser une fibre optique lentillée 1 qui vient d'être décrite, on réalise les étapes suivantes :
i/ positionnement d'une fibre optique 2 sur un support,
ii/ découpe à 90°, notamment par clivage, et préparation de l'extrémité distale 22 de la fibre optique,
iii/ trempage ou immersion de l'extrémité distale 22 de la fibre optique dans une résine en matériau photopolymère,
iv/ polymérisation par laser de la résine afin de former une surface externe de lentille optique délimitée au moins par une portion concave 30 et une portion plane 31, parallèle ou inclinée selon un angle non nul par rapport à l'axe longitudinal X de la fibre optique, et notamment avec une lentille optique supplémentaire 5 en dessous de la portion plane 31,
v/ dépôt d'un matériau au moins partiellement réfléchissant sur tout ou partie de la portion concave de la surface externe de la lentille, de sorte à former le miroir 4.

L'étape ii/ peut être réalisée avant l'étape i/.

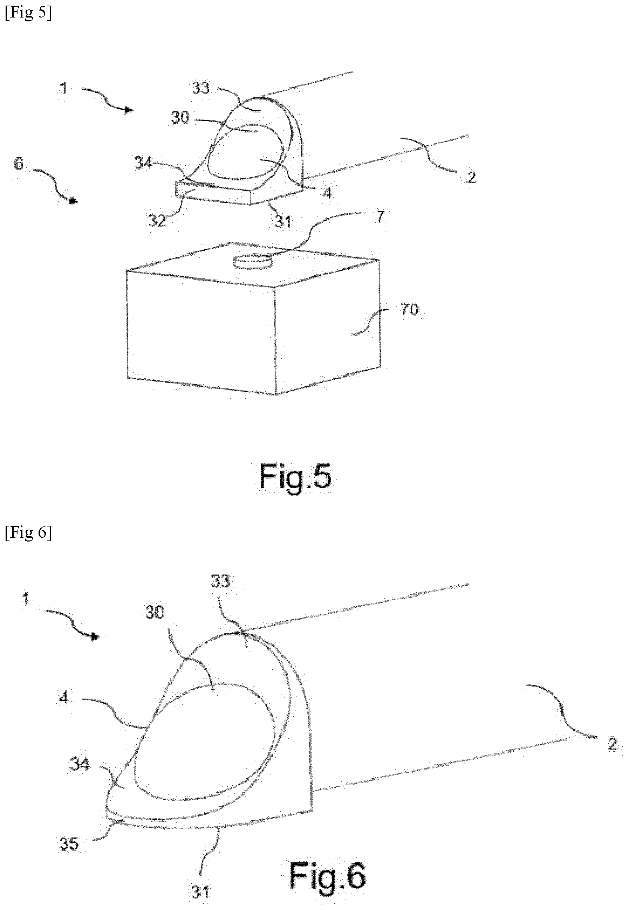

Un sous-ensemble optique (OSA) 6 intégrant une fibre optique lentillée 1 qui vient d'être décrite est montré aux figures 4 et 5.

Ce sous-ensemble 6 comprend un composant optoélectronique 7 agencé à distance et en regard de la portion plane 31 de la lentille principale 3. Le composant optoélectronique 7 peut être une source de lumière, notamment un laser VCSEL, ou un récepteur de lumière, notamment une photodiode. La distance entre la portion plane 31 et la surface du composant optoélectronique peut varier de quelques microns à quelques centaines de microns.

Comme montré, le composant optoélectronique 7 peut être supporté par un substrat 70 et l'espace entre le composant optoélectronique 7 et la portion plane 31 de la lentille principale 3, ou le cas échéant avec la lentille supplémentaire 5 est rempli d'air ou de résine transparente dans la gamme de longueur d'ondes donnée. La résine, notamment différente de celle utilisée pour réaliser la lentille miroir, permet de protéger les surfaces optiques de la fibre lentillée, en particulier la portion plane 31 et/ou la lentille optique supplémentaire 5, et/ou du composant opto-électronique des pollutions ou agressions mécaniques (rayure...), chimiques ou environnementales (humidité, fluides...).

Comme illustré à la figure 4, le faisceau optique F entrant ou sortant par la portion plane 31 de la lentille principale 3 est parfaitement focalisé sur le composant optoélectronique 7.

La figure 6 illustre une variante de forme de lentille 3 optimisée. Le parallélépipède droit est remplacé par une forme latérale effilée, arrondie 35 en dessous de la portion concave 30. Cette forme de surface externe optimisée avec la portion arrondie latérale 35 réduit le volume de résine à polymériser pour obtenir la lentille 3, ce qui permet un gain de temps, tout en gardant une forme robuste. Cette portion arrondie latérale 35 évite également des arêtes fragiles à la base du parallélépipède droit.

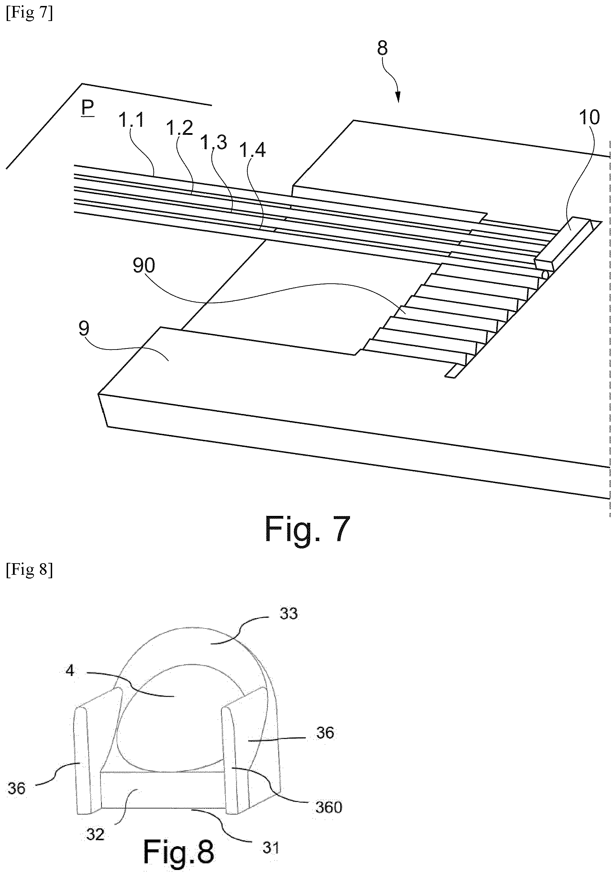

On a illustré à la figure 7, un sous-ensemble optique 8 dit multivoies optiques, c'est-à-dire comprenant plusieurs fibres optiques lentillées 1 formant un ruban. Chaque voie peut être émettrice et/ou réceptrice de signaux.

Dans ce sous-ensemble 8, une pluralité de fibres optiques lentillées 1.1, 1.2, 1.3, 1.4 sont positionnées et bloquées chacune dans une des rainures 90, de préférence en forme de V, d'un support 9. La portion arrondie 33 épousant au moins en partie le diamètre externe de la fibre optique 2, ou avantageusement située en retrait à l'intérieur de l'enveloppe cylindrique de la fibre optique 2, permet de positionner la fibre lentillée dans l'une des rainures sans interférence entre cette dernière et la lentille. Par conséquent, cela permet d'adapter le pas entre les rainures, donc entre les fibres lentillées, vers la dimension la plus faible possible. Cela permet d'obtenir un OSA aux dimensions les plus compactes possibles.

Dans le cadre de fibres optiques agencées en ruban, l'ensemble des axes longitudinaux X des fibres optiques permet de définir un plan P commun. Lors de la réalisation de la lentille sur chaque fibre, le plan P commun en association avec la portion plane 31 de la lentille à réaliser permet de définir aisément l'orientation angulaire de chaque lentille par rapport à l'axe X de sa fibre optique associée. Ainsi, chaque lentille réalisée sur chaque fibre optique du ruban est correctement orientée par rapport au plan P et l'axe longitudinal X, et ensuite correctement orientée par rapport au support 9 recevant les fibres lentillées dans les rainures 90 du support.

Une barrette 10 d'une pluralité de composants optoélectroniques est agencée sur le support avec chacun des composants optoélectroniques, agencés à distance et en regard de la portion plane 31 de la lentille d'une des fibres optiques 1.1, 1.2, 1.3, 1.4. La barrette 10 peut être directement agencée ou pas sur le support. Elle peut par exemple être montée sur un composant intermédiaire lui-même en regard du support 9.

Un sous-ensemble optique OSA illustré aux figures 4 et 5 ou à la figure 7 peut être intégré dans un module optoélectronique.

La figure 8 montre une mode de lentille optique 3 en bout de fibre optique, qui comprend deux projections 36, agencées de part et d'autre du miroir 4, en saillie formant des butées de positionnement axial.

Telles qu'illustrées, les deux projections 36 s'étendent depuis la portion plane 31 de sortie du faisceau optique avec une portion sur la surface externe courbe 33, et au-delà de la face plane 32 de la lentille.

Comme montré, chaque projection 36 comprend une face plane 360 de butée, qui est orthogonale à l'axe longitudinal (X) de la fibre optique.

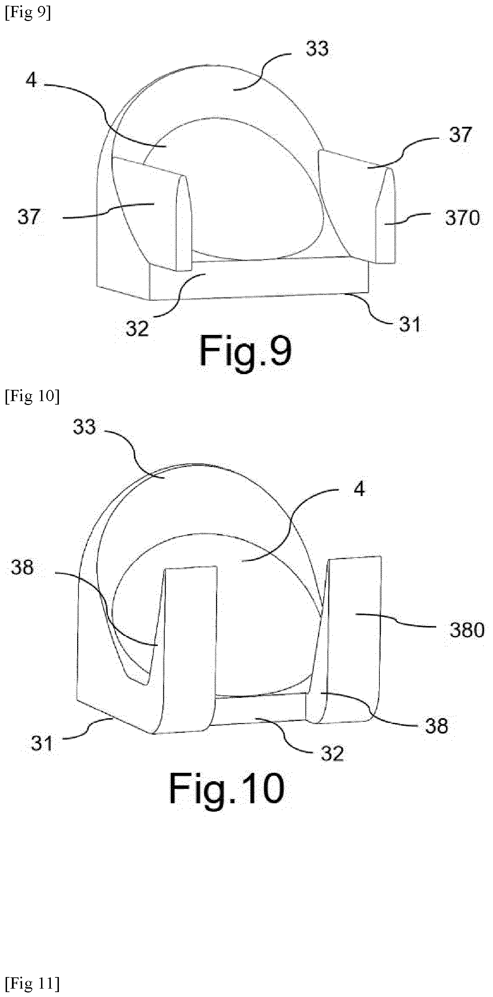

La figure 9 illustre une alternative selon laquelle les deux projections 37 en saillie ne s'étendent que depuis la surface externe courbe 33 et donc non depuis la portion plane 31.

Ici encore, chaque projection 37 comprend une face plane 370 de butée, qui est orthogonale à l'axe longitudinal (X) de la fibre optique.

La figure 10 illustre une autre alternative selon laquelle les deux projections 38 en saillie ont chacune une forme de corne qui s'étend depuis la portion extrémité libre 32 de la lentille optique.

Ici encore, chaque projection 38 comprend une face plane 380 de butée, qui est orthogonale à l'axe longitudinal (X) de la fibre optique.

Avantageusement, le matériau des butées est le même que celui de la lentille optique.

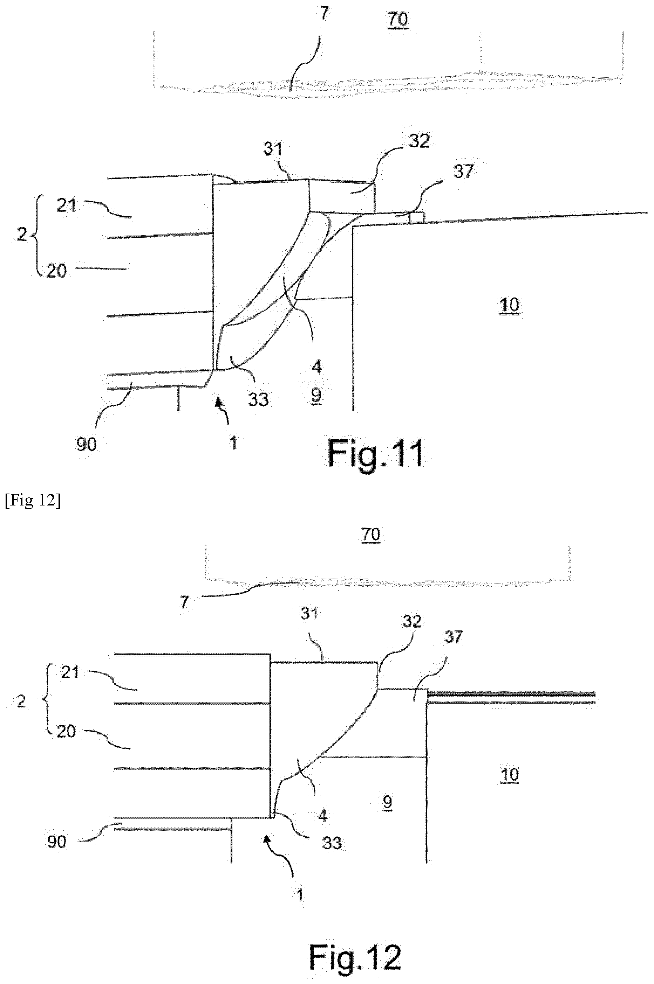

Les figures 11 et 12 illustrent la mise en butée axiale d'une fibre optique lentillée unitaire 1 par les projections 37 dont la face d'extrémité plane 370 vient en appui contre un élément adapté qui peut être par exemple une zone d'une barrette 10 de plusieurs composants optoélectroniques 7. L'élément de butée peut aussi être une surface verticale d'un support 9, tel qu'un substrat en silicium ou en verre.

La fibre lentillée unitaire 1 est ainsi insérée par glissement dans une rainure 90, par exemple en forme de V du support 9 jusqu'à la détection de la butée mécanique axiale de la face 370, à la verticale contre l'élément.

Grâce à ces butées mécaniques axiales, le miroir 4 est parfaitement positionné axialement vis-à-vis du composant optoélectronique 7 et donc le faisceau optique à la sortie de la portion plane 31 est parfaitement focalisé sur ledit composant 7.

Les zones 360, 370 ou 380 ne sont pas nécessairement planes et l'appui contre l'élément adapté peut être de type linéaire si les surfaces 360, 370 ou 380 sont cylindriques. Cet appui peut aussi être ponctuel selon les formes en contact choisies, sans pour autant sortir du cadre de l'invention.

D'autres variantes et améliorations peuvent être prévues sans pour autant sortir du cadre de l'invention.

La forme et/ou les dimensions de la lentille optique peu(ven)t différer de celles illustrées et prendre n'importe quelle forme à la condition que la surface externe intègre une portion concave. Elles peuvent par exemple être partiellement sous la forme d'un parallélépipède droit ou autres... de préférence de manière à ce que la portion arrondie 33 de la lentille se situe en retrait à l'intérieur de l'enveloppe cylindrique de la fibre optique.

## Revendications

1. Fibre optique lentillée (1) unitaire comprenant :
- une fibre optique (2) d'axe longitudinal (X), dont l'extrémité distale (22) est une surface plane orthogonale à l'axe longitudinal ;
- une lentille optique (3) principale à unique indice de réfraction, agencée à l'extrémité distale de la fibre et dont la surface externe est délimitée au moins par une portion concave (30) et une portion plane (31), parallèle à ou inclinée selon un angle non nul avec l'axe longitudinal de la fibre, la lentille optique étant formée intégralement sur l'extrémité distale de la fibre optique, en formant un élément monobloc avec cette dernière;
- un miroir (4) épousant au moins une partie de la portion concave de la lentille principale, le miroir étant au moins en partie réfléchissant dans au moins une gamme de longueurs d'onde donnée, de sorte qu'au moins une partie d'un faisceau optique (F) provenant de la fibre et traversant la lentille principale est réfléchie par le miroir pour sortir par la portion plane (31) de la lentille principale ou réciproquement, qu'au moins une partie d'un faisceau optique traversant la portion plane de la lentille principale et traversant la lentille principale est réfléchie par le miroir pour sortir par la fibre.

2. Fibre optique lentillée selon la revendication 1, la lentille optique principale étant fusionnée avec la fibre optique de sorte à former un élément monobloc.

3. Fibre optique lentillée selon la revendication 1 ou 2, comprenant une lentille optique supplémentaire (5) agencée à la surface de la portion plane (31).

4. Fibre optique lentillée selon l'une des revendications précédentes, la hauteur (H) de la lentille principale étant inférieure ou égale au rayon externe de la fibre optique.

5. Fibre optique lentillée selon l'une des revendications précédentes, la portion concave de la surface externe de la lentille principale, et le cas échéant de celle supplémentaire, étant une surface biconique, de préférence une double-paraboloïde.

6. Fibre optique lentillée selon l'une des revendications précédentes, le matériau de la lentille principale, et le cas échéant de lentille supplémentaire étant transparent dans la gamme de longueurs d'onde donnée, de préférence comprise entre 800 et 1700 nm.

7. Fibre optique lentillée selon l'une des revendications précédentes, le miroir étant une couche métallique, de préférence choisie parmi Au, Al, Ni, Ag, déposée sur la portion concave de la lentille principale.

8. Fibre optique lentillée selon l'une des revendications 1 à 7, le miroir étant une couche diélectrique réfléchissante dans la gamme de longueurs d'onde donnée.

9. Fibre optique lentillée selon l'une des revendications, comprenant au moins une projection, de préférence deux agencées de part et d'autre du miroir (4), en saillie au-delà de la portion d'extrémité libre (32) de la surface externe, la(les) projection(s) étant destinée à former une butée axiale avec un support (10) pour positionner axialement la fibre optique.

10. Fibre optique lentillée selon la revendication 10, chaque projection comprenant une zone, de préférence sous la forme d'une face plane, de butée orthogonale à l'axe longitudinal (X) de la fibre optique.

11. Fibre optique lentillée selon l'une des revendications 9 ou 10, la(les) projection(s) étant réalisée(s) en étant transversalement circonsrite(s) dans la section transversale de la fibre lentillée.

12. Sous-ensemble optique (6) comprenant :
- au moins une fibre optique lentillée (1) unitaire selon l'une des revendications précédentes,
- au moins un composant optoélectronique (7) agencé à distance et en regard de la portion plane de la lentille principale parallèle à ou inclinée selon un angle non nul avec l'axe longitudinal (X) de la fibre.

13. Sous-ensemble optique selon la revendication 12, l'espace entre le composant optoélectronique et la portion plane de la lentille principale, ou le cas échéant avec la lentille supplémentaire, étant rempli d'air, de résine transparente dans la gamme de longueur d'ondes donnée ou d'un adhésif transparent dans la gamme de longueur d'ondes donnée.

14. Sous-ensemble optique selon la revendication 12 ou 13, comprenant :
- un support (9) comprenant une pluralité de rainures (90), de préférence en forme de V,
- une pluralité de fibres optiques lentillées (1.1, 1.2, 1.3...) positionnées et bloquées chacune dans une des rainures,
- une barrette (10) d'une pluralité de composants optoélectroniques, agencée sur le support avec chacun des composants optoélectroniques agencés à distance et en regard de la portion plane de la lentille principale d'une des fibres optiques.

15. Procédé de réalisation une fibre optique lentillée unitaire selon l'une des revendications 1 à 11, comprenant les étapes suivantes :
i/ positionnement d'une fibre optique sur un support,
ii/ découpe à 90°, notamment par clivage, et préparation de l'extrémité distale de la fibre optique,
iii/ trempage ou immersion de l'extrémité distale de la fibre optique dans une résine en matériau photopolymère,
iv/ polymérisation par laser de la résine afin de former une surface externe de lentille optique principale délimitée au moins par une portion concave et une portion plane, parallèle à ou inclinée selon un angle non nul avec l'axe longitudinal de la fibre optique,
v/ dépôt d'un matériau au moins partiellement réfléchissant sur tout ou partie de la portion concave de la surface externe de la lentille principale, de sorte à former le miroir.
